# EUROPEAN PATENT APPLICATION

(11) **EP 2 551 544 A1**
(43) Date of publication of application: **30.01.2013**
(21) Application number: 11759286.5
(22) Date of filing: 17.03.2011
(51) Int. Cl.: F16D 23/12

(54) **CLUTCH RELEASE MECHANISM**

(30) Priority: 25.03.2010 JP 2010070096
(71) Applicant: Aisin Seiki Kabushiki Kaisha, Aichi 448-8650 (JP); AISIN AI Co., Ltd., Nishio-shi, Aichi 445-0006 (JP)
(72) Inventor: ISANO, Takayuki, Kariya-shi Aichi 448-8650 (JP); KAZAOKA, Masumi, Kariya-shi Aichi 448-8650 (JP); MORI, Kyosuke, Kariya-shi Aichi 448-8650 (JP)
(74) Representative: Kramer - Barske - Schmidtchen
(86) International application number: PCT/JP2011/056324
(87) International publication number: WO 2011/118480

(57) **Abstract**

A clutch release mechanism that can reduce production cost, and increase power transmission efficiency and controllability. The clutch release mechanism comprises: a puller that can move in a set direction in response to operation of a predetermined mechanism (for example, a sliding mechanism containing an output rod); a roller rotatably supported by the puller; and a release fork that is supported by a fulcrum in a manner so as to be able to be caused to reciprocate by a pivot support member, receives biasing force at the point of action by means of a diaphragm spring via a release bearing, and has a rolling contact surface that the roller rollably contacts at the point of force application. The roller has a guide surface formed at a predetermined shape at the outer peripheral surface, and the rolling contact surface has an alignment portion that aligns with the guide surface (figure 1).

## Description

### Technical Field

This application claims priority based on Japanese Patent Application No 2010-070096 filed on March 25, 2010, the entire disclosure of the aforesaid application being incorporated herein by reference.
The present invention relates to a clutch release mechanism for releasing or engaging a clutch that is connected so as to be able to connect or disconnect an input shaft and output shaft.

### Background

In a vehicle, in order that rotary power of an engine is not transmitted to a transmission at engine startup or when changing gears, a clutch apparatus is provided in the power transmission path between the engine and transmission. The clutch apparatus can connect or disconnect between the engine and transmission, and is such that by stepping on and operating a clutch pedal, the operating force of the clutch is transmitted by way of a clutch release mechanism such as a link mechanism.

A conventional clutch mechanism is such that a clutch disk is provided between a flywheel and a pressure plate; the elastic force of a diaphragm spring, which is supported so as to be able to rotate by a clutch cover that is integrated with and rotates together the flywheel, presses the pressure plate so as to connect with the clutch; one end (power point) of a release fork, which is supported so as to be able to pivot by a pivot support member that is fastened to a clutch housing, is pulled by an output rod that is mounted in an actuator that is installed in the housing, and by the other end of the release lever pressing the diaphragm spring by way of a release bearing, releases the clutch connection (for example, refer to patent literature 1). In the clutch release mechanism of this clutch apparatus, one end of the output rod is a pivot bearing that is able to pivot about the power point section of the release fork, and the other end of the output rod is attached to a worm wheel of a crank mechanism in the actuator by way of a support pin so as to be able to pivot freely.

### Citation List

### Patent Literature

Patent Literature 1:JP Patent Kokai Publication No.2004-301238A

### SUMMARY

### Technical Problem

The entire contents of patent literature 1 are incorporated in this specification by reference. The following analysis is given by the present invention.
However, in a conventional clutch release mechanism, a crank mechanism having complex operation and backlash is used, so there is a possibility that there will be a drop in power transmission efficiency from the drive source to the clutch release mechanism. Moreover, when moving the output rod through a stroke, one end section of the output rod moves around the fulcrum point of the release fork, and the other end section of the output rod moves around the shaft section of the worm wheel. Therefore, the nonlinearity between the rotation angle of the worm wheel and the movement amount of the release fork becomes large, and there is a possibility that the controllability (responsiveness and positional precision) will decrease.

Furthermore, in a conventional clutch release mechanism, the power point of the release fork is supported by a pivot support member so as to be able to pivot in the forward-backward direction and the left-right direction, and so there is a possibility that prying force may occur at the power point during operation. In order to suppress a decrease in power transmission efficiency due to this prying force, it is necessary that the movement path of the axis line of the output rod be located on a plane that passes through the power point, fulcrum point, and the movement path of the point of action of the release lever. Therefore, there arises a need to increase the positioning precision of the output rod with respect to the release fork, so there is a possibility that the manufacturing cost will increase.

It is a major object of the present invention to provide a clutch release mechanism that is able to improve power transmission efficiency and controllability, as well as reduce the manufacturing cost.

### Solution to Problem

According to one aspect of the present invention, a clutch release mechanism comprises: a puller that is able to move in a fixed direction according to operation of a specified mechanism; a roller(s) that is rotatably supported by the puller; and a release fork that together with being supported by a specified fixed member so as to be able to pivot about a fulcrum point, receives a biasing force at a point of action from a diaphragm spring by way of a release bearing, and has a rolling contact surface that comes in rolling contact with the roller at a power point; wherein the roller has a guide surface that is formed in a specified shape around the outer circumferential surface thereof; and the rolling contact surface has an alignment portion that is aligned with the guide surface.

In the clutch release mechanism of the present invention, preferably the specified mechanism is a slide mechanism that is slidably supported by a fixed specified member, and includes an output rod that slides driven by a power source; and the puller follows the sliding of an output rod, and is able to rotate about an axis line of the output rod as a center axis.

In the clutch release mechanism of the present invention, preferably the axis line of the output rod is set so as to be nearly parallel with the axis of rotation of a clutch disk.

In the clutch release mechanism of the present invention, preferably a portion where the alignment portion and the guide surface come in contact is included on a plane that passes through the axis line of the output rod and that is parallel with a pivot axis of the release fork when loading characteristic of a diaphragm spring is at a maximum.

In the clutch release mechanism of the present invention, preferably the release fork has a through hole section or groove section through which the output rod is inserted.

The clutch release mechanism of the present invention, preferably comprises a nut that screws onto the output rod, and regulates movement of the puller toward the side opposite from the release fork side.

In the clutch release mechanism of the present invention, preferably the roller is one of a plurality of rollers; the plurality of rollers has a first roller and a second roller; the first roller and the second roller are rotatably supported by both sides of the puller; axes of rotation of the first roller and the second roller are located on the same line as each other, and are set so as to be nearly perpendicular to an axial direction of the output rod; and the release fork, as rolling contact surfaces, has a first rolling contact surface with which the first roller can come in rolling contact, and a second rolling contact surface with which the second roller can come in rolling contact.

In the clutch release mechanism of the present invention, preferably the guide surface of the first roller and the guide surface of the second roller are formed into an inclined tapered shape such that radius of each becomes larger as going away from the output rod; the alignment portion of the first rolling contact surface is aligned with the guide surface of the first roller; and the alignment portion of the second rolling contact surface is aligned with the guide surface of the second roller.

In the clutch release mechanism of the present invention, preferably the guide surface has a first inclined surface, and a second inclined surface that is located a location closer to the output rod than the first inclined surface; the first inclined surface is inclined so that its radius becomes larger as going away from the output rod; and the second inclined surface is inclined so that its radius becomes smaller as going away from the output rod, has a larger surface area than a surface area of the first inclined surface, and has a smaller slope than a slope of the first inclined surface.

In the clutch release mechanism of the present invention, preferably the roller is one of a plurality of rollers; the plurality of rollers has a first roller and a second roller; the first roller and the second roller are rotatably supported by one side of the puller, and are able to roll on the rolling contact surface; axes of rotation of the first roller and the second roller are separated from each other and are set so as to be nearly perpendicular to an axial direction of the output rod.

In the clutch release mechanism of the present invention, preferably the puller is supported by an output shaft [sic. rod] so as to be able to pivot about the axis line of the output shaft [sic. rod].

In the clutch release mechanism of the present invention, preferably a cross-sectional shape of a surface of the rolling contact surface is an involute curve whose radius of a base circle is a distance from a fulcrum point of the release fork to an axis line of the output rod.

In the clutch release mechanism of the present invention, preferably the specified mechanism is a screw mechanism that is supported by a fixed specified member, rotates driven by a power source, and includes a shaft member having a male screw section at a specified area around an outer circumferential surface thereof; the puller is formed in a ring shape, has a female screw section formed around an inner circumferential surface thereof that meshes with the male screw section, and is able to move in an axial direction of the shaft member according to rotation of the shaft member; and the axis line of the shaft member is set so as to be nearly parallel with the axis of rotation of a clutch disk.

### Advantageous Effects of Invention

With the present invention, by setting a puller having a roller on the output rod, it is possible to cause a release fork to pivot by the output rod sliding in the axial direction without one end of the output rod having to be a pivot bearing at the power point of the release fork, so together with being able to improve the power transmission efficiency, it is possible to increase the linearity and improve controllability of the input and output between the output rod and the release fork. Moreover, by providing a guide surface on the roller and providing a rolling contact surface on the release fork that corresponds to the guide surface, the guiding action (rail action) between the guide surface and the rolling contact surface automatically aligns the puller even when the puller is supported by the output rod so as to be able rotate or have backlash, so it is possible to ease the positioning precision. As a result, assembly becomes easier and manufacturing cost can be reduced.

### BRIEF DESCRIPTION OF THE DRAWINGS

FIG. 1 is a drawing that schematically illustrates the construction of a clutch apparatus that includes a clutch release mechanism of a first exemplary embodiment of the present invention.
FIG. 2A is an enlarged side view of the output rod and surrounding construction in the clutch release mechanism of a first exemplary embodiment of the present invention; and FIG. 2B is a cross-sectional view of section X-X'.
FIG. 3A is a side view for explaining the operation of the output rod and surrounding construction in the clutch release mechanism of a first exemplary embodiment of the present invention; and FIG. 3B is a cross-sectional view of section X-X'.
FIGS. 4A to 4C are enlarged cross-sectional drawings of the output rod and surrounding construction in the clutch release mechanism of a first exemplary embodiment of the present invention, where FIG. 4A is a first example, FIG. 4B is a second example, and FIG. 4C is a third example.
FIG. 5 is a drawing the schematically illustrates loading characteristics of a diaphragm spring in a clutch apparatus that includes the clutch release mechanism of a first exemplary embodiment of the present invention.
FIG. 6A is a side view that schematically illustrates an output rod and surrounding construction in the clutch release mechanism of a second exemplary embodiment of the present invention; and FIG. 6B is a cross-sectional view of section X-X'.
FIG. 7A is a side view that schematically illustrates an output rod and surrounding construction in the clutch release mechanism of a third exemplary embodiment of the present invention; and FIG. 7B is a cross-sectional view of section X-X'.
FIGS. 8A and 8B are schematic drawings for explaining the construction of the rolling contact surface of the release fork in a clutch release mechanism of a fourth exemplary embodiment of the present invention.
FIG. 9A is a side view that schematically illustrates a shaft member and surrounding construction in a clutch release mechanism of a fifth exemplary embodiment of the present invention; and FIG. 9B is a cross-sectional view of section X-X'.

### MODES

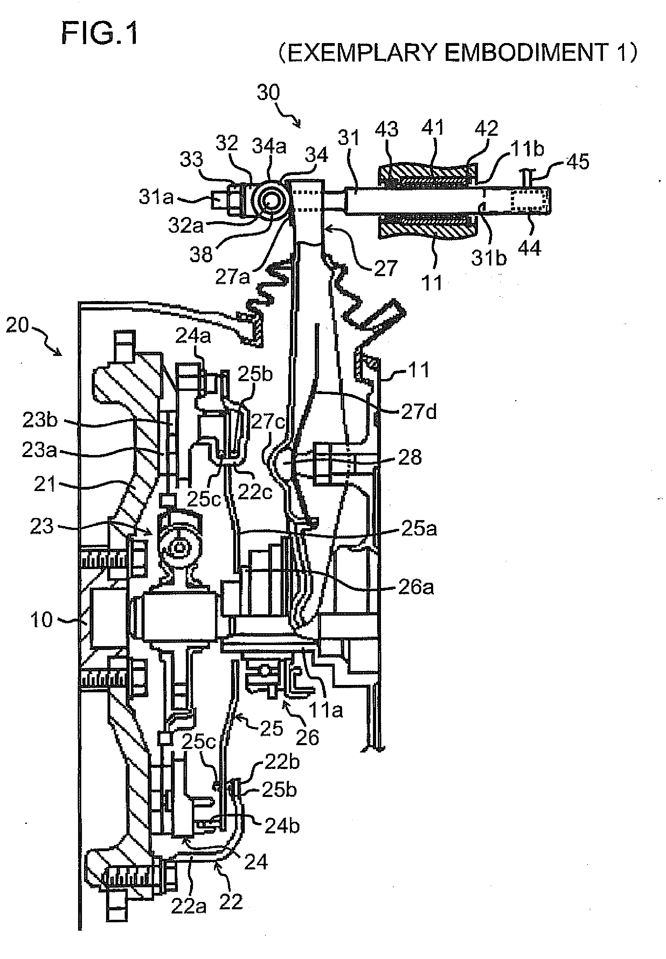

A clutch release mechanism (30 in FIG. 1) of an exemplary embodiment of the present invention comprises: a puller (32 in FIG. 1) that is able to move in a fixed direction according to specified operation of the mechanism; a roller (34 in FIG. 1) that is supported by the puller so as to be able to rotate; and a release fork (27 in FIG. 1) that together with being supported by a specified member (for example, a pivot support member 28 in FIG. 1) that is fastened to the fulcrum so as to be able to pivot, receives a biasing force at the point of action from a diaphragm spring (25 in FIG. 1) by way of release bearing (26 in FIG. 1), and has a rolling contact surface (27a in FIG. 1) at the power point that the roller can come in rolling contact with; wherein the roller has a guide surface (34a in FIG. 1) that is formed into a specified shape around the outer circumferential surface; and the rolling contact surface has an alignment portion that is aligned with the guide surface.

The reference numbers that are used in the drawings of this application are exclusively for aiding in understanding the explanations, and are not intended to limit to the forms illustrated in the figures.

### (Exemplary Embodiment 1)

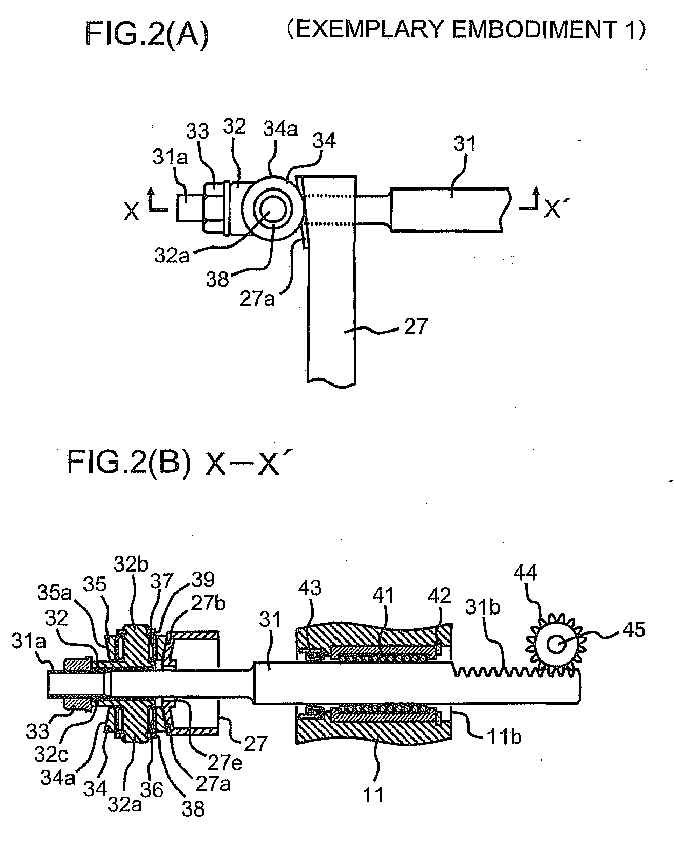

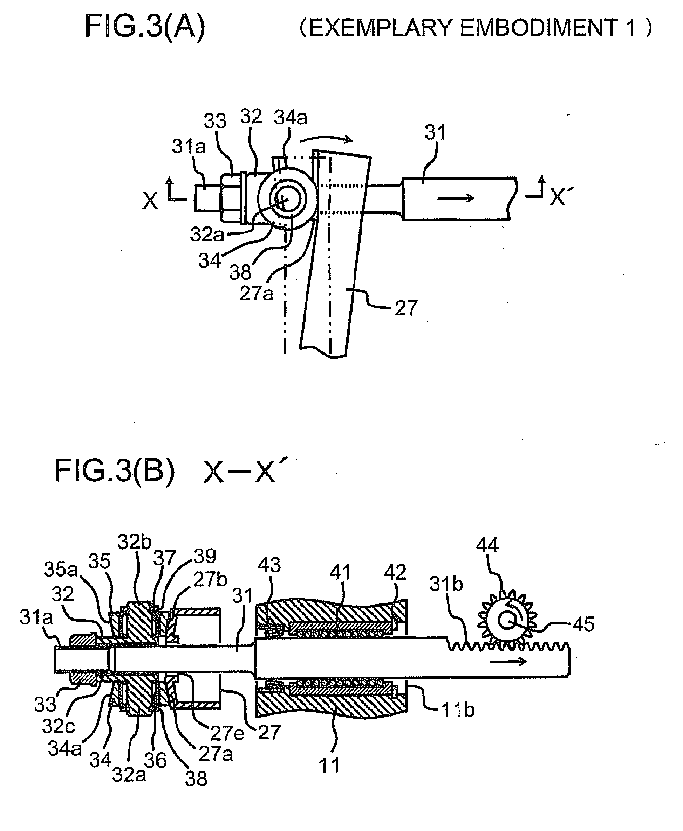

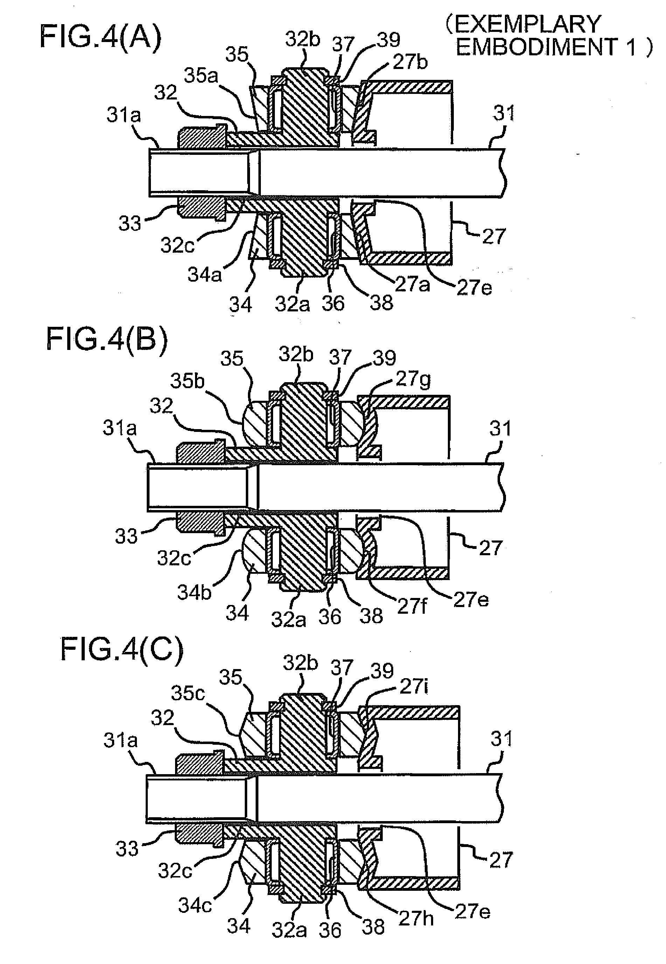

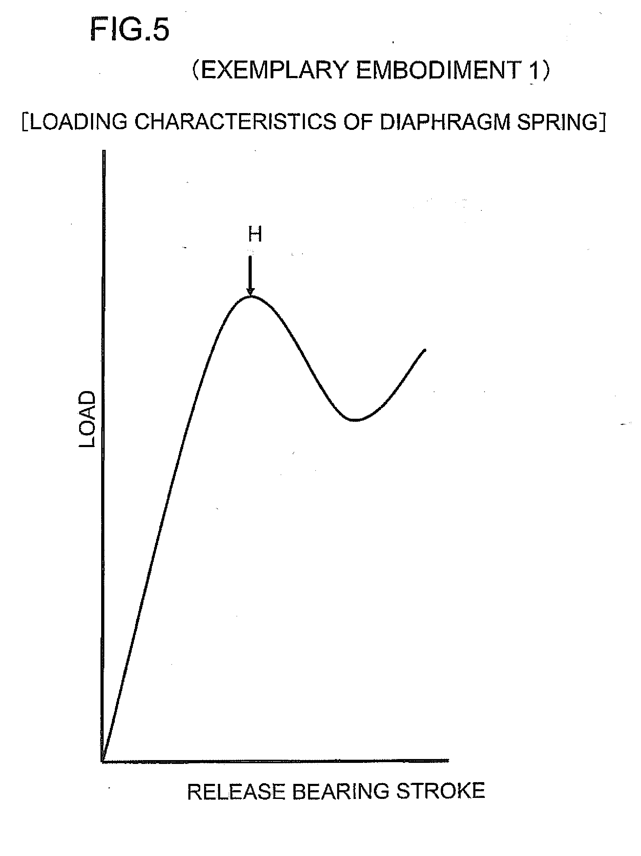

A clutch release mechanism of a first exemplary embodiment of the present invention will be explained using the drawings. FIG. 1 is a drawing that schematically illustrates the construction of a clutch apparatus that includes the clutch release mechanism of a first exemplary embodiment of the present invention. FIG. 2A is an enlarged side view of the output rod and surrounding construction in the clutch release mechanism of a first exemplary embodiment of the present invention; and FIG. 2B is a cross-sectional view of section X-X'. FIG. 3A is a side view for explaining the operation of the output rod and surrounding construction in the clutch release mechanism of a first exemplary embodiment of the present invention; and FIG. 3B is a cross-sectional view of section X-X'. FIGS. 4A to 4C are enlarged cross-sectional drawings of the output rod and surrounding construction in the clutch release mechanism of a first exemplary embodiment of the present invention, where FIG. 4A is a first example, FIG. 4B is a second example, and FIG. 4C is a third example. FIG. 5 is a drawing the schematically illustrates the loading characteristics of a diaphragm spring in a clutch apparatus that includes the clutch release mechanism of a first exemplary embodiment of the present invention.

In referencing FIG. 1, the clutch apparatus includes a friction clutch 20 that is located in the power transmission path between an engine (not illustrated in the figure) and a transmission (not illustrated in the figure), and a clutch release mechanism 30 that operates the friction clutch 20. The clutch apparatus changes the engagement state of the friction clutch 20 by way of an electronic controller (not illustrated in the figure) that controls an actuator (not illustrated in the figure) that directly or indirectly drives the rotating shaft 45 of the clutch release mechanism 30.

The friction clutch 20 has as main component elements a flywheel 21, a clutch cover 22, a clutch disk 23, a pressure plate 24, a diaphragm spring 25, and a clutch release mechanism 30. The clutch release mechanism 30 has as main component elements a release bearing 26, a release fork 27, a pivot support member 28, an output rod 31, a puller 32, a nut 33, rollers 34, 35, bearings 36, 37, snap rings 38, 39, a linear ball bearing 41, a snap ring 42, a seal 43, a pinion gear 44, and a rotating shaft 45 (see FIG. 1 and FIG. 2). The pressure plate 24 and the diaphragm spring 25 are integrally assembled in the clutch cover 22, so these will also be called the clutch cover assembly.

The flywheel 21 is a circular disk that is made of cast iron and is fastened to the crankshaft 10 of the engine by bolts so as to integrally rotate with the crankshaft 10.

The clutch cover 22 is a cylindrical shaped member that has a cylindrical section 22a, a flange section 22b that is formed around the inner perimeter side of the cylindrical section 22a, and a plurality of fulcrum formation sections 22c that are formed so as to be evenly spaced in the circumferential direction around the inner perimeter side of the flange section 22b. The clutch cover 22 is such that a rim section that is formed around the outer perimeter section of the cylindrical section 22a is fastened to the flywheel 21 by bolts, so as to integrally rotate with the flywheel 21. The clutch cover 22 is such that fulcrum members 25b, 25c, between which the diaphragm spring 25 fits, are supported by the fulcrum formation sections 22c.

The clutch disk 23 is a friction plate that transmits the power from the engine (not illustrated in the figure) to the transmission (not illustrated in the figure). The clutch disk 23 is located between the flywheel 21 and the pressure plate 24, and is such that the center section fits with the input shaft of the transmission with a spline fit so as to not to be able to rotate relative to the input shaft of the transmission, but is able to move in the axial direction relative to the input shaft. Clutch facings 23a, 23b, which is composed of a friction material, are attached and fastened to both surfaces of the outer perimeter section of the clutch disk 23. The clutch disk 23 has the function to absorb fluctuation in the engine torque (for example, a damper function).

The pressure plate 24 pushes the clutch disk 23 toward the flywheel 21 side and holds the clutch disk 23 between it and the flywheel 21, where this clutch disk 23 is a ring-shaped plate that frictionally engages with the flywheel 21 so as to integrally rotate with the flywheel 21. The pressure plate 24 is elastically connected with the clutch cover 22 by way of straps 24a, and rotates together with the rotation of the clutch cover 22. The pressure plate 24 has a ring-shaped convex section 24b (can also be a ring-shaped member that is separate from the pressure plate 24) that receives the pressing force at the point of action on the outer perimeter portion of the diaphragm spring 25.

The straps 24a are composed of a plurality of layered thin plate spring members. The straps 24a are such that one end is fastened to the outer perimeter section of the clutch cover 22 by rivets, and the other end is fastened to the outer perimeter section of the pressure plate 24 by rivets. A plurality of straps 24a are arranged on the circumference line. As a result, the straps 24a can apply a biasing force in the axial direction to the pressure plate 24 so that the pressure plate 24 can separate from the flywheel 21.

The diaphragm spring 25 is a disk spring shaped member that has a ring-shaped portion that is located along the inner perimeter of the cylindrical section 22a of the clutch cover 22, and a plurality of lever sections 25a that extend inward from the inner perimeter section of the ring-shaped portion. Each lever section 25a is supported by the fulcrum formation sections 22c of the clutch cover by way of the fulcrum members 25b, 25c. The ring-shaped portion of the diaphragm spring 25 comes in contact with the convex section 24b of the pressure plate 24 around the outer perimeter section, and functions so as to press the pressure plate 24 toward the flywheel 21 side. Each lever section 25a of the diaphragm spring 25 functions to press the inner perimeter section of the release bearing 26 toward the release fork 27 side. The diaphragm spring 25, by the inside end sections of the lever sections 25a being pressed toward the flywheel 21 side by the release bearing 26, pivotally moves with respect to the clutch cover 22 about the fulcrum members 25b, 25c as a fulcrum, and operates so that the outer-perimeter section of the ring-shaped portion separates from the convex section 24b of the pressure plate 24. As a result of this kind of operation, it is possible to perform operation that causes frictional engagement between the clutch disk 23 and the flywheel 21 or the releases that engagement.

The release bearing 26 is a ball bearing whose outer race is supported by the inner race by way of balls so as to be able to rotate. The release bearing 26 is located around the outside of the a support sleeve 11a that is supported by a transmission case so as to enclose the outside of the input shaft of the transmission. The inner race of the release bearing 26 is supported by the support sleeve 11a so as to slide in the axial direction. The outer race of the release bearing 26 comes in contact with the inner perimeter section (center section of the diaphragm spring 25) of the lever sections 25a at the power point sections 26a, and presses the inner perimeter section of the lever sections 25a toward the flywheel 21 side.

The release fork 27 is a lever shaped member for causing the release bearing 26 to slide in the axial direction. The release fork 27 comes in contact at a the point of action with the release bearing 26 in a state such that the release bearing 26 can be pressed toward the flywheel 21 side, and comes in contact with the rollers 34, 35 at the rolling contact surfaces 27a, 27b, which become power points, in a state so as to be able to be pressed by the rollers 34, 35 that are connected to the output rod 31 toward the transmission side (right side in the figure) (see FIG. 2B). The release fork 27 is assembled in the pivot support member 28 by a spring 27d, and is able to pivot at the fulcrum section 27c in the middle portion about the pivot support member 28 as a fulcrum.

The rolling contact surface 27a is a surface with which the roller 34 comes in contact so as to be able to roll, is located on the engine side (left side in the figure) of the release fork 27, and has an alignment (adapting) portion that is aligned (adapted) with the shape of the guide surface 34a that is formed around the outer circumferential surface of the roller 34. The rolling contact surface 27a is a surface with which the roller 35 comes in contact so as to be able to roll, is located on the engine side (left side in the figure) of the release fork 27, and has an alignment (adapting) portion that is aligned (adapted) with the shape of the guide surface 35a that is formed around the outer circumferential surface of the roller 35. The rolling contact surfaces 27a, 27b, by being guided by corresponding guide surfaces 34a, 35a, are such that the movement track of the release fork is automatically adjusted so that surface of the movement track on the line connecting the power point and the point of action of the release fork 27 does not shift from the axis line of the output rod 31. The rolling contact surfaces 27a, 27b, as illustrated in FIG. 4A, can have an inclined shape (tapered shape) that incline in a direction from the axis of rotation of the rollers 34, 35 going in the direction away from the output rod 31. In addition, as illustrated in FIG. 4B, the rolling contact surfaces 27f, 27g can have an arc-shaped cross section (can be either a convex shape or concave shape) on the plane on which the axis line of the output rod 31 and the axis line of the rollers 34, 35 cross, or as illustrated in FIG. 4C, can have a V-shaped cross section (can be either a convex shape or concave shape) on the plane on which the axis line of the output rod 31 and the axis line of the rollers 34, 35 cross. The alignment (adapting) portions of the rolling contact surfaces 27a, 27b are set so that tangent line at the point of contact between the alignment portions and the guide surfaces 34a, 35a (corresponds to the line in the perpendicular direction with respect paper surface in FIG. 3B) is perpendicular (or nearly perpendicular) to the axis line of the output rod 31 when the loading by the diaphragm spring 25 is a maximum (point H in FIG. 5).

A through hole section 27e is formed in a position between the rolling contact surface 27a and rolling contact surface 27b of the release fork 27, and the output rod 31 is inserted through this through hole section 27e. The through hole section 27e is formed so as not to collide with the output rod 31 even when the release fork 27 pivots. Instead of this through hole section 27e, it is also possible to have a groove section (a notched section).

The output rod 31 is a rod shaped member. The output rod 31 is supported in the middle section by the transmission case 11 by way of a linear ball bearing 41 (another member is also possible as long as the output rod 31 is fastened) so as to be able to slide. The output rod 31 is able to slide in the axial direction of the output rod 31. The axis line of the output rod 31 is set to be parallel with (or nearly parallel with) the axis of rotation of the clutch disk 23 (or the input shaft of the transmission) (left-right direction in FIG. 1). The output rod 31 has a thread section 31a on which a nut 33 is screwed located at a position near the end section on the engine side (left side in FIG. 1). The output rod 31 is inserted through the nut 33 and a through hole 32c in a puller 32 that is located between the rolling contact surfaces 27a, 27b of the release fork 27, and supports the puller 32 so as to be able to rotate and to be able to move in the axial direction (have backlash is also possible) (see FIG. 2B). The output rod 31 is inserted through the through hole section 27e in the release fork 27 and is set so as not to collide with the through hole section 27e when the release fork 27 pivots (step FIG. 2B). The output rod 31 receives a bias force from the rolling contact surfaces 27a, 27b of the release fork 27 in a direction toward the engine side (left side in the figure) (this bias force corresponds to a force that is transmitted from the diaphragm spring 25) by way of the rollers 34, 35, bearings 36, 37, puller 32 and nut 33. The output rod 31 is such that a rack gearing section 31b that engages with a pinion gear 44 that is rotated and driven by a power source is formed in a location further on the transmission side (right side in FIG. 2) than the linear ball bearing 41. As the pinion gear 44 rotates, the rotation force of the pinion gear 44 is converted to linear movement by the rack gear 32b, and the output rod 31 slides in the axial direction of the output rod 31.

The puller 32 is a cylindrical shaped (or annular) member. The puller 32 is located between the nut 33 and the rolling contact surfaces 27a, 27b of the release fork 27. The puller 32 is such that the output rod 31 is inserted through a through hole 32c in the cylindrical portion, and is supported by the output rod 31 so as to be able to rotate and to be able to move in the axial direction (having backlash is also possible). The puller 32 follows the sliding movement of the output rod 31 and is able to rotate about the axis line of the output rod 31 as a center axis. The puller 32 is such that movement in the axial direction toward the engine side (left side in the figure) is stopped by the nut 33 that screws onto the output rod 31, and receives a pushing force from the rolling contact surfaces 27a, 27b of the release fork 27 by way of the rollers 34, 35 and the bearings 36, 37. The puller 32 has two pin sections 32a, 32b on the outer circumferential surface. The axis lines of the pin section 32a and pin section 32b are arranged so as to be on the same line as each other, and are set so as to be perpendicular (or nearly perpendicular) to the axis line of the output rod 31. The pin section 32a supports the roller 34 by way of a bearing 36 so as to be able to rotate, and a snap ring 38 that regulates movement in the direction of the axis of rotation of the roller 34 is attached. The pin section 32b supports the roller 35 by way of a bearing 37 so as to be able to rotate, and a snap ring 38 that regulates movement in the direction of the axis of rotation of the roller 34 is attached.

The nut 33 is a member that screws onto the thread section 31a on the output rod 31. The nut 33 is located further on the engine side (left side in the figure) than the puller 32, and regulates (stops) the movement of the puller 32 in the axial direction toward the engine side.

The roller 34 is a rolling body that rolls on the rolling contact surface 27a of the release fork 27. The roller 35 is a rolling body that rolls on the rolling contact surface 27b of the release fork 27. The roller 34 is supported by the support section 32a of the puller 32 by way of the bearing 36 so as to be able to rotate, and by the snap ring 38 that is attached to the pin section 32a coming in contact with the bearing 36, movement in the direction of the axis of rotation is regulated. The roller 35 is supported by the pin section 32b of the puller 32 by way of the bearing 37 so as to be able to rotate, and by the snap ring 39 that is attached to the pin section 32b coming in contact with the bearing 37, movement in the direction of the axis of rotation is regulated. The axis of rotation of the roller 34 and the axis of rotation of the roller 35 are aligned on the same line each other, and are set so as to be perpendicular (or nearly perpendicular) to the direction of the axis line of the output rod 31. The rollers 34, 35 have guide surfaces 34a, 35a on the outer circumferential surfaces thereof that guide the rolling contact surfaces 27a, 27b of the release fork 27 so as to automatically adjust the operation track of the release fork 27. The guide surfaces 34a, 35a are formed in a shape that is aligned (adapted) with the alignment (adapting) portions of the rolling contact surfaces 27a, 27b. As illustrated in FIG. 4A, the guide surfaces 34a, 35a can be an inclined shape (tapered shape) such that the radius becomes larger going away from the output rod 31 (or from the cylindrical portion of the puller 32). In addition, as illustrated in FIG. 4B, the guide surfaces 34b, 35b can have an arc-shaped cross section (can be either a convex shape or concave shape) on a plane on which the axis line of the output rod 31 and the axis line of the rollers 34, 35 cross, or as illustrated in FIG. 4C, the guide surfaces 34c, 35c can have V-shaped cross section (can be either a convex shape or concave shape) on a plane on which the axis line of the output rod 31 and the axis line of the rollers 34, 35 cross.

The bearing 36 is a needle bearing that is located between the roller 34 and the pin section 32a of the puller 32. The bearing 37 is a needle bearing that is located between the roller 35 and the pin section 32b of the puller 32. In the first exemplary embodiment, needle bearings are used as the bearings 36, 37 of the rollers 34, 35, however, other kinds of bearings could also be used.

The snap ring 38 is a member that regulates the movement in the direction of the axis of rotation of the roller 34 by coming in contact with the bearing 36, and is attached to the pin section 32a of the puller 32. The snap ring 39 is a member that regulates the movement in the direction of the axis of rotation of the roller 35 by coming in contact with the bearing 37, and is attached to the pin section 32b of the puller 32.

The linear bearing 41 is a bearing that supports the output rod 31 in the axial direction. The linear bearing 41 is inserted into (or fitted into) a though hole section 11b, which has a stepped section, that is formed in the transmission case 11 (can be any other fastened member), and movement in the axial direction is regulated (stopped) by the stepped section of the through hole section 11b and a snap ring 42. In the first exemplary embodiment, the linear bearing 41 is used as a mechanism for supporting the output rod 31 so as to be able to slide, however, some other manner could also be used.

The snap ring 42 is a member that regulates (stops) the movement in the axial direction of the linear bearing 41. The snap ring 42 is attached to the through hole section 11b of the transmission case 11.

A seal 43 is a member that seals in lubrication oil of the linear bearing 41 and the pinion gear 44, and prevents water or dust from entering in. The seal 43 is attached to the through hole section 11b of the transmission case 11.

The pinion gear 44 is a rotating member that engages with the rack gear section 31b of the output rod 31. The pinion gear 44 integrally rotates together with the rotating shaft 45 that rotates in a fixed position. The rotation power of the pinion gear 44, is converted to linear movement by the rack gear section 31b, and causes the output rod 31 to slide in the axial direction. In the first exemplary embodiment, the pinion gear 44 and rack gear section 31b are used as a mechanism that converts the thrust force of a power source such as an actuator; however, it is possible to use some other kind of thrust conversion mechanism such as a cam mechanism or a screw mechanism.

The rotating shaft 45 is a shaft member that rotates at a fixed position. The rotating shaft 45 integrally rotates together with the pinion gear 44. Rotation power is applied to the rotating shaft 45 by way of speed reducer such as sliding gear mechanism from the driving power of a power source such (not illustrated in the figure) as an actuator, motor or the like.

Next, the operation of the clutch apparatus that includes the clutch release mechanism of this first exemplary embodiment of the present invention will be explained.

In operation going from the state in FIG. 2 to the state in FIG. 3, the rotating shaft 45 causes the pinion gear 44 to rotate in a specified direction, which causes the output rod 31 to slide toward the transmission side (right side in the figure, and as a result, the rolling contact surfaces 27a, 27b of the release fork, which are power points, are caused to pivot toward the transmission side (right side in the figure) by way of the nut 33, puller 32, bearings 36, 37 and rollers 34, 35; the action point of the release fork 27 presses the power point of the diaphragm spring 25 by way of the release bearing 26, and the point of action of the diaphragm spring 25 moves so as to separate from the convex section 24b of the pressure plate 24, after which the pressure plate 24 separates from the flywheel 2,which causes the friction engagement between the flywheel 21 and the clutch disk 23 to be released, and the clutch apparatus is in the disconnected state.

In the operation going from the state in FIG. 2 to the state in FIG. 3, the rotating shaft 45 causes the pinion gear 44 to rotate in a specified direction, which causes the output rod 31 to slide toward the engine side (left side in the figure, and as a result, the nut 33, puller 32, bearings 36, 37 and rollers 34, 35 are pressed by the rolling contact surfaces 27a, 27b of the release fork (due to force from the diaphragm spring 25) and move toward the engine side (left side in the figure), and by being pressed by the power point of the diaphragm spring 25 toward the transmission side (right side in the figure), the point of action of the release fork 27 is caused to pivot by way of the release bearing 26 toward the transmission side (right side in the figure), which results in the point of action of the diaphragm spring 25 pressing the convex section 24b of the pressure plate 24, causing the pressure plate 24 to approach the flywheel 21, causing friction engagement between the flywheel 21 and the clutch disk 23, and the clutch apparatus is then in the connected state.

In either operation, the rolling contact surfaces 27a, 27b of the release fork 27 are guided by the guide surfaces 34a, 35a of the rollers 34, 35, and as a result, the release fork 27 is automatically adjusted so that the plane of the operation track of the axis line of the release fork 27 does not shift from the axis line of the output rod 31. Moreover, the puller 32 is able to rotate with respect to the output rod 31, so the guide surfaces 34a, 35a of the rollers 34, 35 are automatically adjusted to correspond with the rolling contact surfaces 27a, 27b of the release fork 27.

With this first exemplary embodiment, by setting the a puller 32 having rollers 34, 35 in the output rod 31, one end of the output rod 31 does not need to be a pivot bearing for the power point of release fork 27, and it becomes possible for sliding of the output rod 31 in the axial direction to cause the release fork 27 to pivot, so together with being able to improve the power transmission efficiency, it is also possible to increase the linearity of the input and output between the output rod 31 and the release fork 27, and thus it is possible to improve controllability. Moreover, in construction where the puller 32 is supported by the output rod 31, positioning precision of the rolling direction of the rollers 34, 35 and the operating direction of the release fork 27 is necessary. However, by providing guide surfaces 34a, 35a on the rollers 34, 35, and providing rolling contact surfaces 27a, 27b on the release fork 27 that correspond with the guide surfaces 34a, 35a, the guiding action (rail action) between the guide surfaces 34a, 35a and the rolling contact surfaces 27a, 27b results in the puller 32 being automatically aligned even when the puller 32 is supported by the output rod 31 so as to be able to rotate freely or to have backlash, and thus it is possible to lessen the amount of positioning precision. As a result, assembly becomes easier, and it is possible to reduce manufacturing costs.

### Exemplary Embodiment 2

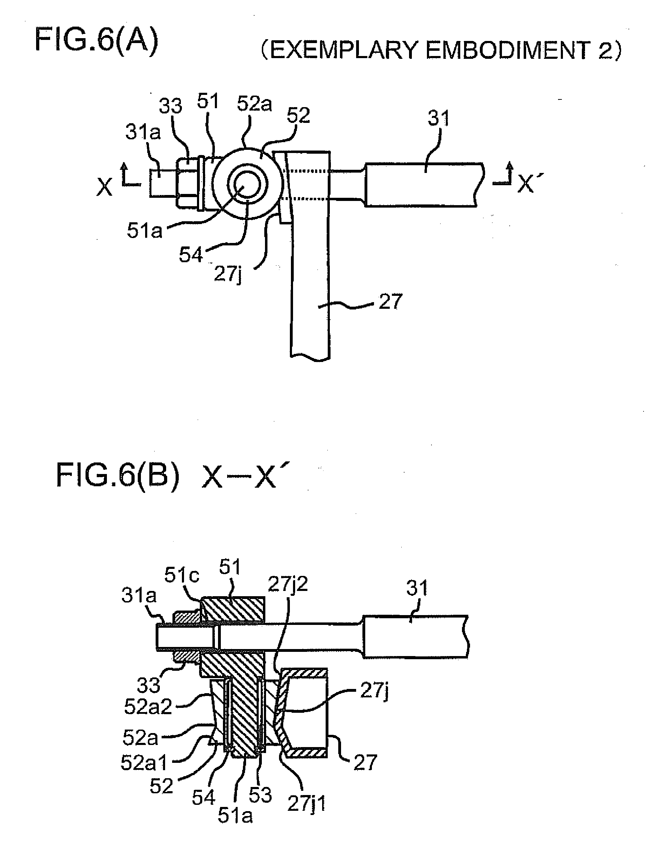

The clutch release mechanism of this second exemplary embodiment of the present invention will be explained using the drawings. FIG. 6A is a side view that schematically illustrates the output rod and surrounding construction in the clutch release mechanism of a second exemplary embodiment of the present invention; and FIG. 6B is a cross-sectional view of section X-X'.

This second exemplary embodiment is a variation of the first exemplary embodiment, wherein one roller 52 is supported by one side of a puller 51 instead of both sides so as to be able to rotate, a first inclined section 52a1 and a second inclined section 52a1 are set in a guide surface 52a of the roller 52, and correspondingly a first inclined surface 27j1 and a second inclined surface 27j2 are set in a rolling contact surface 27j of a release fork 27.

The release fork 27 is a lever-shaped member for causing a release bearing (corresponds to 26 in FIG. 1) to slide in the axial direction. The release fork 27 comes in contact with the release bearing (corresponds to 26 in FIG. 1) at the point of action in a state so as to be able to push the release bearing (corresponds to 26 in FIG. 1) toward the flywheel (corresponds to 21 in FIG. 1) side, and comes in contact with the roller 52 at the rolling contact surface 27j, which is the power point, in a state so as to be able to be pressed toward the transmission side (right side in the figure) by the roller 52 that is connected with the output rod 31 (see FIG. 6B). The release fork 27 is assembled into a pivot support member (corresponds to 28 in FIG. 1) by a spring (corresponds to 27d in FIG. 1), and is able to pivot at a fulcrum section (corresponds to 27c in FIG. 1) in the middle section about a pivot support member (corresponds to 28 in FIG. 1) as a fulcrum point. The release fork 27 does not have a through hole section (27e in FIG. 2) as in the case of the release fork (27 in FIG. 2) of the first exemplary embodiment.

The rolling contact surface 27j is a surface the roller 52 comes in contact with so as to be able to roll, is located on the engine side (left side in the figure) of the release fork 27, and has an alignment (adapting) portion that is aligned (adapted) with the shape of a guide surface 52a that is formed around the outer circumferential surface of the roller 52. By the rolling contact surface 27j being guided by the guide surface 52a, the operation track of the release fork 27 is automatically adjusted so that the plane of the operating track of connecting line between the power point and the point of action of the release fork 27 does not shift from the axis line of the output shaft 31. The rolling surface 27j has a first inclined surface 27j1 and a second inclined surface 27j2 that is located closer to the output rod 31 than the first inclined surface 27j1. The first inclined surface 27j1 is inclined so that the radius (of the roller 52) becomes larger as going away from the output rod 31, and comes in contact with the first inclined surface 52a1 of the guide surface 52a (of the roller 52). The second inclined surface 27j2 is inclined so that the radius (of the roller 52) becomes smaller as going away from the output rod 31, and comes in contact with the second inclined surface 52a2 of the guide surface 52a (of the roller 52). The second inclined surface 27j2 is set such that the surface area is larger than the surface area of the first inclined surface 27j1, and is set to have a smaller slope than the slope of the first inclined surface 27j1. The aligned (adapted) portion of the rolling contact surface 27j is such that the tangent line (FIG. 6B) at the point of contact between the aligned portion and the guide 52a is perpendicular (or nearly perpendicular) to the axis line of the output rod 31 when the loading characteristic of the diaphragm spring (corresponds to 25 in FIG. 1) is at a maximum (corresponds to point H in FIG.5).

The puller 51 is a cylindrical member. The puller 51 is located between a nut 33 and the rolling contact surface 27j of the release fork 27. The puller 51 is such that the output rod 31 is inserted through a through hole 51c in the cylindrical portion, and is supported by the output rod 31 so as to be able to rotate and to move in the axial direction (there can be backlash). The puller 51 follows the sliding of the output rod 31, and can rotate about the axis line of the output rod 31 as the center axis. The puller 51 is stopped by the nut 33 that is screwed onto the output rod 31 from moving in the axial direction toward the engine side (left side in the figure), and receives a pressing force from the rolling contact surface 27j of the release fork 27 by way of the roller 52 and bearing 53. The puller has one pin section 51a on the outer circumferential surface. The axis line of the pin section 51a is set so as to be perpendicular (or nearly perpendicular) with the axis line of the output rod 31. The pin section 51a supports the roller 52 by way of a bearing 53 so as to be able to roll, and a snap ring is attached to the pin section 51a so as to regulate movement in the direction of the axis of rotation of the bearing 53.

The roller 52 is a rotating member that rotates on the rolling contact surface 27j of the release fork 27. The roller 52 is supported by the pin section 51a of the puller 51 by way of the bearing 53 so as to be able to rotate, and by a snap ring 54 that is attached to the pin section 51a coming in contact with the bearing 53, movement in the direction of the axis of rotation is regulated. The axis of rotation of the roller 52 is set so as to be perpendicular (or nearly perpendicular) to the axial direction of the output rod 31. The roller 52 has a guide surface 52a around the outer circumferential surface thereof that guides the rolling contact surface 27j of the release fork 27 so that the operation track of the release fork 27 is automatically adjusted. The guide surface 52a has a first inclined surface 52a1, and a second inclined surface 52a2 that is located at a position closer to the output rod 31 then the first inclined surface 52a1. The first inclined surface 52a1 is inclined such that the radius (of the roller 52) becomes larger as going in a direction away from the output rod 31. The second inclined surface 52a2 is inclined such that the radius (of the roller 52) becomes smaller as going in a direction away from the output rod 31, the surface area of the second inclined surface 52a2 is set to be greater than the surface area of the first inclined surface 52a1, and the slope of the second inclined surface 52a2 is set to be greater than the slope of the first inclined surface 52a1.

The bearing 53 and the snap ring 54 have the same construction as the bearing (36 in FIG. 2) and the snap ring (38 in FIG. 2) of the first exemplary embodiment. The other construction and operation of this second exemplary embodiment are the same as in the first exemplary embodiment.

With this second exemplary embodiment, together with obtaining the same effect as in the first exemplary embodiment, by making the cross-sectional shape of the rolling contact surface 27j of the release fork 27 in a convex form, it is possible to control the rotation of the puller 51 around the output rod 31 even when the puller 51 supports the roller 52 on one side so as to be able to rotate. Moreover, there is only one roller 51, so it is possible to reduce the manufacturing cost by the reduction in the number of parts. In addition, the puller 51 is constructed so as to support the puller 51 on one side so as to be able to rotate, so the layout is improved. Furthermore, by changing the angle between the first inclined surfaces 27j1, 52a1 and the second inclined surfaces 27j2, 52a2, it is possible to cancel out the moment of the roller 52 around the axis line of the output rod 51.

### Exemplary Embodiment 3

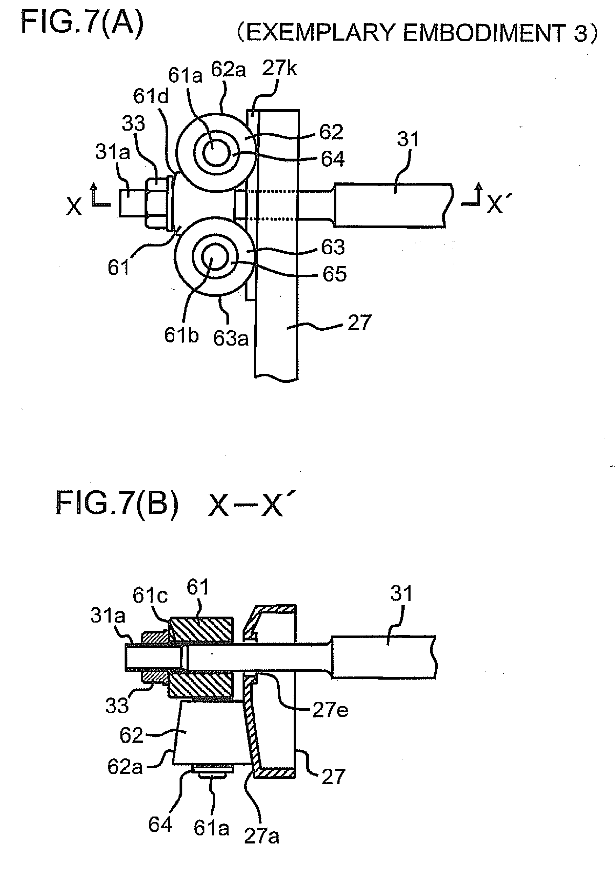

The clutch release mechanism of a third exemplary embodiment of the present invention will be explained using the drawings. FIG. 7A is a side view that schematically illustrates the output rod and surrounding construction in the clutch release mechanism of a third exemplary embodiment of the present invention; and FIG. 7B is a cross-sectional view of section X-X'.

This third exemplary embodiment is a variation of the first exemplary embodiment, where two rollers 52, 63 are supported by a bogey on one side instead of both sides of a puller 61, and guide surfaces 62a, 63a of the rollers 62, 63 roll on a common rolling contact surface 27k of the release fork 27, and the puller 61 is supported so as to be able to pivot with respect to an output rod 31.

The release fork is a lever-shaped member for causing a release bearing (corresponds to 26 in FIG. 1) to slide in the axial direction. The release fork 27 comes in contact with the release bearing (corresponds to 26 in FIG. 1) at the point of action in a state in which the release bearing (corresponds to 26 in FIG. 1) can be pushed toward the flywheel side (corresponds to 21 in FIG. 1), and comes in contact with the rollers 62, 63 at the rolling contact surface 27k, which is the power point, in a state so as to be able to be pushed toward the transmission side (right side in the figure) by the rollers 62, 63 that are connected to the output rod 31 (see FIG. 7B). The release fork 27 is assembled in a pivot support member (corresponds to 28 in FIG. 1) by a spring (corresponds to 27d in FIG. 1), and the pivot support member (corresponds to 28 in FIG. 1) is able to pivot at a fulcrum section (corresponds to 27c in FIG. 1) in the middle portion about a fulcrum point. The release fork 27 has a through hole section 27e for inserting the output rod 31. The through hole section 27e is formed so as not to collide with the output rod 31 even when the release fork 27 pivots. Instead of the through hole section 27e it is possible to use a groove section (notch section).

The rolling contact surface 27k is a surface with which the rollers 62, 63 can come in rolling contact, and is located on the engine side (left side in the figure) of the release fork 27, and has an alignment (adapting) portion that is aligned (adapted) with the shape of guide surfaces 62a, 63a that are formed on the outer circumferential surface of the rollers 62, 63. The rolling contact surface 27k, by being guided by the guide surfaces 62a, 63a, automatically adjusts the operation track of the release fork 27 so that the plane of the operation track of the line connecting the power point and the point of action of the release fork does not shift from the axis line of the output rod 31. The rolling contact surface 27k can have an inclined shape (tapered shape) that is inclined such that the radius (of the rollers 62, 63) becomes larger in a direction as going away from the output rod 31. The rolling contact surface 27k comes in contact with both guide surfaces 62a, 63a. The alignment portion of the rolling contact surface 27k can be set so that the tangent line (corresponds to a line that is perpendicular with the surface of the paper in FIG. 6B) at the contact point where the alignment portion comes in contact with the guide surfaces 62a, 63a is perpendicular (or nearly perpendicular) to the axis line of the output rod 31 when the loading characteristic by the diaphragm spring (corresponds to 25 in FIG. 1) is at a maximum (corresponds to point H in FIG. 5).

The puller 61 is a cylindrical member. The puller 61 is located between a nut 33 and the rolling contact surface 27k of the release fork 27. The puller 61 is such that the output rod 31 is inserted through a through hole section 61c in the cylindrical portion, and is supported by the output rod 31 so as to be able to rotate and to move in the axial direction (having backlash is possible). The puller 61 follows the sliding of the output rod 31, and is able to rotate about the axis line of the output rod 31 as the center axis. The puller 61 is stopped by the nut 33 from moving in the axial direction toward the engine side (left side in the figure), and receives a pushing force from the rolling contact surface 27k of the release fork 27 by way of the rollers 62, 63. The puller 61 has two pin sections 61a, 61b on one side. The axis lines of the pin section 61a and the pin section 61b are arranged so as to be separated from each other and to be parallel with each other, and are set so as to be perpendicular (or nearly perpendicular) to the axis line of the output rod 31. The pin section 61a supports the roller 62 by way of a bearing (not illustrated in the figure) so as to be able to rotate, and a snap ring 64 is attached so as to regulate movement in the direction of the axis of rotation of the roller 62. The pin section 61b supports the roller 63 by way of a bearing (not illustrated in the figure) so as to be able to rotate, and a snap ring 65 is attached so as to regulate movement in the direction of the axis of rotation of the roller 63. The puller 61 has a convex curved surface section 61d on the surface that comes in contact with the nut 33. The curved surface section 61d is for making it possible for the puller 61 to pivot with respect to the output rod 31 so that both of the rollers 62, 63 are always in contact with the rolling contact surface 27k no matter which direction release fork 27 tilts. Therefore, the through hole section 61c is a long hole such that there is no collision with the output rod 31.

The rollers 62, 63 are rolling bodies that rotate on the rolling contact surface of the release fork 27. The rollers 62, 63 are supported by one side of the puller 61 so as to be able to rotate. The roller 62 is supported by pin section 61a of the puller 61 by way of a bearing (not illustrated in the figure) so as to be able to rotate, and a snap ring 64 that is attached to the pin section 61a regulates movement in the direction of the axis of rotation by coming in contact with the bearing. The roller 63 is supported by pin section 61b of the puller 61 by way of a bearing (not illustrated in the figure) so as to be able to rotate, and a snap ring 65 that is attached to the pin section 61b regulates movement in the direction of the axis of rotation by coming in contact with the bearing. The axes of rotation of the rollers 62, 63 are separated from each other and are parallel with each other, and are set so as to be perpendicular (or nearly perpendicular) to the axial direction of the output rod 31. The rollers 62, 63 have guide surfaces 62a, 63a on the outer circumferential surfaces thereof that guide the rolling contact surface 27k of the release fork 27 so that the operation track of the release fork 27 is automatically adjusted. The guide surfaces 62a, 63a are formed in a shape that is aligned (adapted) with the alignment portion of the rolling contact surface 27k. The guide surface 62a can be an inclined shape (tapered shape) such that the radius (of the rollers 62, 63) becomes larger in a direction going away from the output rod 31.

The snap rings 64, 65 have the same construction as the snap ring (38 in FIG. 2) of the first exemplary embodiment. The other construction and operation of this third exemplary embodiment are the same as in the first exemplary embodiment.

With this third exemplary embodiment, the same effect is obtained as in the first exemplary embodiment, and by using bogey type construction in which the puller 61 supports a plurality of rollers 62, 63 on one side so as to be able to rotate, the layout is improved when compared with construction in which the puller supports a plurality of rollers on both side so as to be able to rotate (corresponds to the first exemplary embodiment). Moreover, by making the guide surfaces 62a, 63a of the rollers 62, 63 and the rolling contact surface 27k of the release fork 27 be a tapered shape that inclines toward one side, the ease of processing is improved when compared with when they are uneven.

### Exemplary Embodiment 4

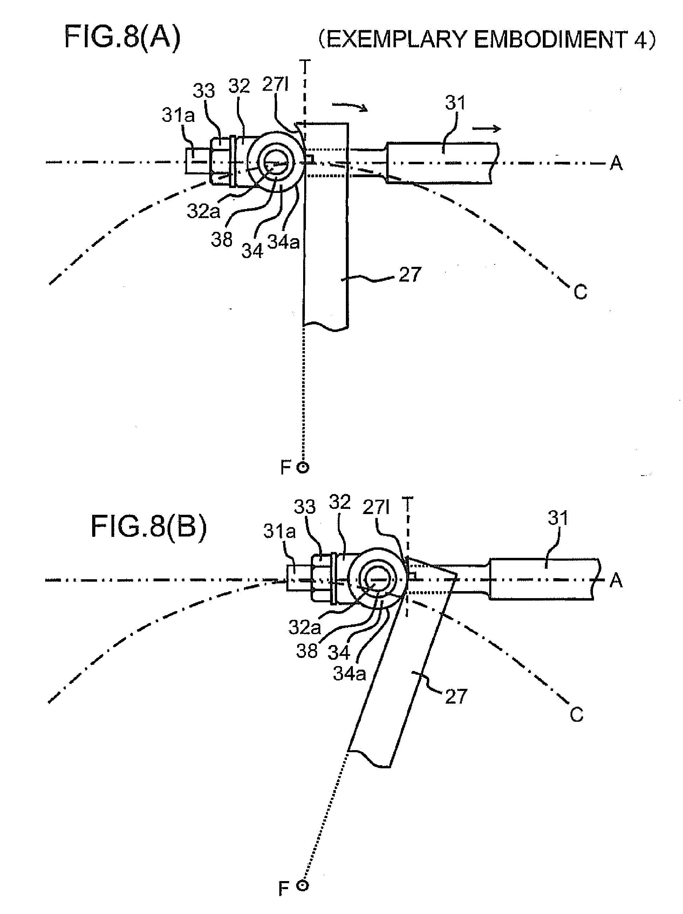

The clutch release mechanism of a fourth exemplary embodiment of the present invention will be explained using the drawings. FIGS. 8A and 8B are schematic drawings for explaining the construction of the rolling contact surface of the release fork in the clutch release mechanism of a fourth exemplary embodiment of the present invention.

This fourth exemplary embodiment is a variation of the first exemplary embodiment, and in this exemplary embodiment the surface shape of a rolling contact surface 271 of the release fork 27 is set so that the tangent line T at the point of contact between the rolling contact surface 271 and a guide surface 34a of a roller 34 is perpendicular (or nearly perpendicular) to the axis line A of an output rod 31 at any pivot angle of the release fork 27 within a controlled range. The point of contact between the rolling contact surface 271 and the guide surface 34a, as seen from the side, is on the axis line A of the output rod 31 at any pivot angle of the release fork 27 within a controlled range. The cross-sectional shape of the surface of the rolling contact surface 271 ( cross section through the line that connects from the fulcrum point F to the power point of the release fork 27) is an involute curve whose radius of the base circle C is the distance from the fulcrum point F of the release fork 27 to the axis line A of the output rod 31. The stroke of the output rod 31 and the pivot angle of the release fork 27 are proportional. The other construction of the rolling contact surface 271 is the same as that of the first exemplary embodiment. This kind of surface shape of the rolling contact surface 271 can also be applied to the second and third exemplary embodiments.

With this fourth exemplary embodiment, the same effect as in the first exemplary embodiment is obtained, and by making the cross-sectional shape of the surface of the rolling contact surface 271 of the release fork 27 an involute curve whose radius of the base circle C is the distance from the fulcrum point F of the release fork 27 to the axis line A of the output rod 31, component forces except for that in the direction of the axis line A of the output rod 31 of the reaction force of the roller when the release fork 27 is inclined do not occur. Therefore, it is possible to reduce the load on the linear ball bearing (corresponds to 41 in FIG. 1), and it is possible to improve the power transmission efficiency.

### Exemplary Embodiment 5

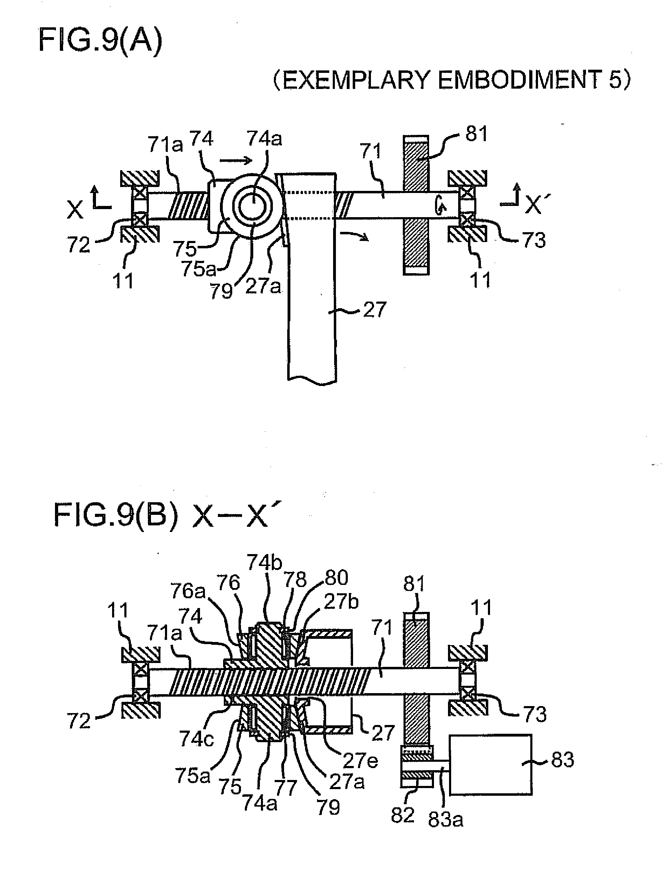

The clutch release of a fifth exemplary embodiment of the present invention will be explained using the drawings. FIG. 9A is a side view that schematically illustrates the shaft member and surrounding construction in the clutch release mechanism of a fifth exemplary embodiment of the present invention; and FIG. 9B is a cross-sectional view of section X-X'.

This fifth exemplary embodiment is a variation of the first exemplary embodiment, and instead of using a stroke mechanism that causes the puller (33 in FIG. 2) to move by the stroke of an output rod (31 in FIG. 2), a screw-rod mechanism that causes a puller 74 to move by the rotation of a shaft member 71 is used.

The shaft member 7 is a bar shaped member. The shaft member 71 is supported by the transmission case 11 (or any other member that is fixed) by way of bearings 72, 73 so as to be able to rotate. The axis line of the shaft member 71 is set so as to be parallel (or nearly parallel) with the axis of rotation of the clutch disk (23 in FIG. 1). The shaft member 71 has a male screw section 71a around the outer circumferential surface of the middle portion on which a female screw section 74c of the puller 74 is thread-engaged. As a result, by the shaft member 71 rotating, the puller 74 moves in the axial direction of the shaft member 71, and it becomes possible for rollers 75, 76, which are supported by the puller 74 so as to be able to rotate, to push the rolling contact surfaces 27a, 27b of the release fork 27. The shaft member 71 is such that a spur gear 81, which engages with a pinion gear 82 that is fastened to the output shaft 83a (rotating shaft), is attached and fastened at a location where the male screw section 71a is not formed. The shaft member 71 integrally rotates with the spur gear 81. The shaft member 71 is such that rotation power from the output shaft 83a of a motor 83 is reduced and transmitted by the pinion gear 82 and spur gear 81. The shaft member 71 is inserted through a through hole section 27e of the release fork 27, as is set so as not to collide with the through hole section 27e when the release fork 27 pivots (see FIG. 9B). The shaft member 71 receives a force (corresponds to a force that is transmitted from the diaphragm spring) from the rolling contact surfaces 27a, 27b of the release fork 27 toward the engine side (left side in the figures) by way of the rollers 75, 76, bearings 77, 78 and puller 74. The shaft member 71 can be constructed so as to be directly connected to the output shaft of the motor.

The puller 74 is a ring-shaped member. The puller 74 has a female screw section 74c that is formed around the inner circumferential surface of the cylindrical portion and that meshes with the male screw section 71a of the shaft member 71. Due to the rotation of the shaft member 71, the puller 74 is able to move in the axial direction of the shaft member 71. Even though the shaft member 71 is rotated, the puller 74 is not rotated due to the rail action of the guide surfaces 75a, 76a of the rollers 75, 76 and the rolling contact surfaces 27a, 27b of the release fork 27. The puller 74 receives a pushing force from the rolling contact surfaces 27a, 27b of the release fork 27 by way of the rollers 75, 76 and bearings 77, 78. The puller 74 has two pin sections 74a, 74b on the outer circumferential surface thereof. The axis lines of both the pin section 74a and pin section 74b are arranged so as to be on the same line as each other, and are set so as to be perpendicular (or nearly perpendicular) with the axis line of the shaft member 71. The pin section 74a supports the roller 75 by way of a bearing 77 so as to be able to rotate, and a snap ring 79 is attached that regulates movement of the roller 75 in the direction of the axis of rotation. The pin section 74b supports the roller 76 by way of a bearing 78 so as to be able to rotate, and a snap ring 80 is attached that regulates movement of the roller 76 in the direction of the axis of rotation. Moreover, it is possible to use a ball screw having higher power transmission efficiency than a slide screw for the screw mechanism.

The rollers 75, 76, bearings 77, 78, snap rings 79, 80 and release fork 27 have the same construction as the rollers 34, 35, bearings 36, 37, snap rings 38, 39 and release fork 27 of the first exemplary embodiment (see FIG. 2). The other construction and operation of this fifth exemplary embodiment are the same as in the first exemplary embodiment. Moreover, the screw mechanism of this fifth exemplary embodiment, which causes the puller 74 to move as the shaft member 71 rotates, can be applied to the second to fourth exemplary embodiments.

With this fifth exemplary embodiment, the same effect is obtained as in the first exemplary embodiment, and by using a screw mechanism that causes the puller 74 to move as the shaft member 71 rotates, it is not necessary to use an expensive linear ball bearing, and thus it is possible to reduce the manufacturing cost.

The exemplary embodiments above are applied to normally closed type clutches, however, they can also be applied to a normally open type clutches, the use of which in dual clutch transmission has been increasing in recent years. Moreover, the exemplary embodiments above are applied to an inner fulcrum type fork shaft in which the fulcrum point is located between the power point and the point of action, however, they can also be applied to an outer fulcrum type fork shaft in which the point of action is located between the power point and the fulcrum point. The exemplary embodiments described above are applied to a dry type clutch, however, they can also be applied to a wet type clutch. Furthermore, the exemplary embodiments described above are applied to a case where an engine is the power source, however, they can also be applied to a power source other than an engine, for example, the exemplary embodiments above can be applied to the connecting and disconnecting of the power of a motor that is used in a hybrid vehicle or an electric automobile.

Changes and modifications to the exemplary embodiments and examples are possible within the framework and the fundamental technical scope of the entire disclosure of the present invention (including the claims and drawings). Moreover, various combinations and selections of the disclosed elements are possible within the scope of the claims of the present invention. In other words, the present invention includes all variations and modifications that can be achieved by one skilled in the art according to the entire disclosure, including the claims, and the technical scope of the invention.

### Reference Sign List

- 10: Crankshaft
- 11: Transmission case
- 11a: Support sleeve

- 11b: Trough hole section
- 20: Friction clutch
- 21: Flywheel
- 22: Clutch cover
- 22a: Cylindrical section
- 22b: Flange section
- 22c: Fulcrum formation section
- 23: Clutch disk
- 23a, 23b: Clutch facing
- 24: Pressure plate
- 24a: Strap
- 24b: Convex section
- 25: Diaphragm spring
- 25a: Lever section
- 25b, 25c: Fulcrum member
- 26: Release bearing
- 26a: Power point section
- 27: Release fork
- 27a, 27b: Rolling contact surface (first rolling contact surface, second rolling contact surface)
- 27c: Fulcrum point
- 27d: Spring
- 27e: Through hole section
- 27f, 27g: Rolling contact (first rolling contact surface, second rolling contact surface)
- 27h, 27i: Rolling contact (first rolling contact surface, second rolling contact surface)
- 27j: Rolling contact surface
- 27j1: First inclined surface
- 27j2: Second inclined surface
- 27k: Rolling contact surface
- 271: Rolling contact surface
- 28: Pivot support member
- 30: Clutch release mechanism
- 31: Output rod
- 31a: Thread section
- 31b: Rack gear section
- 32: Puller
- 32a, 32b: Pin section
- 32c: Through hole section
- 33: Nut
- 34, 35: Roller (first roller, second roller)
- 34a, 35a: Guide surface
- 34b, 35b: Guide surface
- 34c, 35c: Guide surface
- 36, 37: Bearing
- 38, 39: Snap ring
- 41: Linear ball bearing
- 42: Snap ring
- 43: Seal
- 44: Pinion gear
- 45: Rotating shaft
- 51: Puller
- 51a: Pin section
- 51c: Through hole section
- 52: Roller
- 52a: Guide surface
- 52a1: First inclined surface
- 52a2: Second inclined surface
- 53: Bearing
- 54: Snap ring
- 61: Puller
- 61a, 61b: Pin section
- 61c: Through hole section
- 61d: Curved surface section
- 62, 63: Roller
- 62a, 63a: Guide surface
- 64, 65: Snap ring
- 71: Shaft member
- 71a: Male screw section
- 72, 73: Bearing
- 74: Puller
- 74a, 74b: Pin section
- 74c: Female screw section
- 75, 76: Roller
- 75a, 76a: Guide surface
- 77, 78: Bearing
- 79, 80: Snap ring
- 81: Spur gear
- 82: Pinion gear
- 83: Motor
- 83a: Output shaft

## Claims

1. A clutch release mechanism, comprising:
a puller that is able to move in a fixed direction according to operation of a specified mechanism;
a roller(s) that is rotatably supported by the puller; and
a release fork that together with being supported by a specified fixed member so as to be able to pivot about a fulcrum point, receives a biasing force at a point of action from a diaphragm spring by way of a release bearing, and has a rolling contact surface that comes in rolling contact with the roller at a power point; wherein
the roller has a guide surface that is formed in a specified shape around an outer circumferential surface thereof; and
the rolling contact surface has an alignment portion that is aligned with the guide surface.

2. The clutch release mechanism according to claim 1, wherein
the specified mechanism is a slide mechanism that is slidably supported by a fixed specified member, and that includes an output rod that slides driven by a power source; and
the puller follows sliding of an output rod, and is able to rotate about an axis line of the output rod as a center axis.

3. The clutch release mechanism according to claim 2, wherein the axis line of the output rod is set so as to be nearly parallel with the axis of rotation of a clutch disk.

4. The clutch release according to claim 2 or 3, wherein a portion where the alignment portion and the guide surface come in contact is included on a plane that passes through the axis line of the output rod and that is parallel with a pivot axis of the release fork when loading characteristic of a diaphragm spring is at a maximum.

5. The clutch release mechanism according to any one of claims 2 to 4, wherein the release fork has a through hole section or groove section through which the output rod is inserted.

6. The clutch release mechanism according to claim 5, comprising a nut that screws onto the output rod, and regulates movement of the puller toward the side opposite from the release fork side.

7. The clutch release mechanism according to any one of claims 2 to 6, wherein
the roller is one of a plurality of rollers;
the plurality of rollers comprises a first roller and a second roller; the first roller and the second roller are rotatably supported by both sides of the puller;
axes of rotation of the first roller and the second roller are located on the same line as each other, and are set so as to be nearly perpendicular to an axial direction of the output rod; and
the release fork, as rolling contact surfaces, has a first rolling contact surface with which the first roller can come in rolling contact, and a second rolling contact surface with which the second roller can come in rolling contact.

8. The clutch release mechanism according to claim 7, wherein
the guide surface of the first roller and the guide surface of the second roller are formed into an inclined tapered shape such that radius of each becomes larger as going away from the output rod;
the alignment portion of the first rolling contact surface is aligned with the guide surface of the first roller; and
the alignment portion of the second rolling contact surface is aligned with the guide surface of the second roller.

9. The clutch release mechanism according to any one of claims 2 to 6, wherein
the guide surface has a first inclined surface, and a second inclined surface that is located a location closer to the output rod than the first inclined surface;
the first inclined surface is inclined so that its radius becomes larger as going away from the output rod; and
the second inclined surface is inclined so that its radius becomes smaller as going away from the output rod, has a larger surface area than a surface area of the first inclined surface, and has a smaller slope than a slope of the first inclined surface.

10. The clutch release mechanism according to any one of claims 2 to 6, wherein
the roller is one of a plurality of rollers;
the plurality of rollers has a first roller and a second roller;
the first roller and the second roller are rotatably supported by one side of the puller, and are able to roll on the rolling contact surface;
axes of rotation of the first roller and the second roller are separated from each other and are set so as to be nearly perpendicular to an axial direction of the output rod.

11. The clutch release mechanism according to claim 10, wherein the puller is supported by an output shaft [sic. rod] so as to be able to pivot about an axis line of the output shaft [sic. rod].

12. The clutch release mechanism according to any one of claims 2 to 11, wherein a cross-sectional shape of a surface of the rolling contact surface is an involute curve whose radius of a base circle is a distance from a fulcrum point of the release fork to an axis line of the output rod.

13. The clutch release mechanism according to claim 1, wherein
the specified mechanism is a screw mechanism that is supported by a fixed specified member, rotates driven by a power source, and includes a shaft member having a male screw section at a specified area around an outer circumferential surface thereof;
the puller formed in a ring shape, has a female screw section formed around an inner circumferential surface thereof that meshes with the male screw section, and is able to move in an axial direction of the shaft member according to rotation of the shaft member; and
the axis line of the shaft member is set so as to be nearly parallel with the axis of rotation of a clutch disk.
